# EUROPEAN PATENT APPLICATION

(11) **EP 1 629 936 A1**
(43) Date of publication of application: **01.03.2006**
(21) Application number: 05076961.1
(22) Date of filing: 25.08.2005
(51) Int. Cl.: B23K 35/30, B23K 35/32, C04B 37/02

(54) **Low melting temperature silver braze alloy**

(30) Priority: 30.08.2004 US 929819
(71) Applicant: Delphi Technologies, Inc., Troy, MI 48007 (US)
(72) Inventor: Haltiner, Karl J., Fairport, NY 14450 (US); Alexander, Gregory W., Pittsford, NY 14534 (US); Reisdorf, Gary F., Penfield, NY 14526-2242 (US)
(74) Representative: Denton, Michael John

(57) **Abstract**

A brazing alloy comprising elemental silver alloyed with elemental silicon in a silver/silicon ratio between about 95/5 and 99/1, preferably about 97/3. Small amounts of silicon alloyed with silver depress the alloy liquidus curve significantly, the liquidus temperature of a silver and silicon eutectic alloy being about 837°C. Brazing alloys in accordance with the invention are useful in bonding ceramics to ceramics, ceramics to metals, and metals to metals. Copper, vanadium, or other oxygen-reactive surface bonding elements may also be included. Silver/silicon alloys are useful in applications such as assembly of components of solid oxide fuel cells. A variety of silver/silicon alloy brazes can be used within the same fuel cell so that subsequent brazing can be performed without reliquifying a previous braze. A brazing alloy comprising elemental silver and ruthenium in a silver/ruthenium ratio between 97/3 and 99/1 is also included.

## Description

### TECHNICAL FIELD

The present invention relates to alloys for joining materials by brazing; more particularly, to silver-containing braze alloys for joining ceramics to metals; and most particularly, to silver braze alloys containing silicon to lower the liquidus temperature.

### BACKGROUND OF THE INVENTION

Fuel cells which generate electric current by controllably combining elemental hydrogen and oxygen are well known. In one form of such a fuel cell, an anodic layer and a cathodic layer are separated by a permeable electrolyte formed of a ceramic solid oxide, such as yttrium-stabilized zirconium (YSZ). Such a fuel cell is known in the art as a "solid oxide fuel cell" (SOFC). A single cell is capable of generating a relatively small voltage and wattage, typically between about 0.5 volt and about 1.0 volt, depending upon load, and less than about 2 watts per cm² of cell surface. Therefore, in practice it is known to stack together, in electrical series, a plurality of cells.

In a currently-preferred arrangement, each ceramic-based fuel cell is bonded to a surrounding metal "cassette" frame to form a fuel cell sub-assembly, using a silver/copper-based braze. As the solid braze alloy is liquefied, the copper is rapidly oxidized to form copper oxide which separates from the alloy, leaving essentially pure silver as the brazing material. The copper oxide migrates to the boundaries of the liquid and adheres to the ceramic and the metal, providing an attachment layer for the silver. Exemplary silver/copper and silver/vanadium braze alloys are disclosed in International Publication No. WO 03/059843, published 24 July 2003, which is incorporated herein by reference.

A problem in the use of such alloys is that the liquidus temperature is substantially the melting point of pure silver, 962°C. This temperature is high enough to preclude use of some fuel cell materials which can be damaged by such high temperatures. In addition, in some manufacturing schemes it is desirable to perform two separate brazing steps, and it is further desirable that the first brazed seal not be reliquefied when performing the second seal. Thus, a higher temperature braze could be used for the first seal, and a lower temperature braze for the second seal.

What is needed in the art is a means for lowering the liquidus temperature of a silver brazing alloy.

It is a principal object of the present invention to provide an improved silver brazing alloy having a liquidus temperature significantly lower than the melting temperature of silver.

### SUMMARY OF THE INVENTION

Briefly described, a brazing alloy in accordance with the invention comprises elemental silver alloyed with another element that serves to reduce the liquidus temperature of the alloy to a temperature below the melting point of silver. In a preferred embodiment, a brazing alloy comprises elemental silver alloyed with elemental silicon in a silver/silicon ratio between about 95/5 and 99/1, preferably about 97/3. Silver melts at 962°C, but small amounts of silicon alloyed with silver depress the alloy liquidus point significantly, the liquidus temperature of a silver and silicon eutectic alloy being about 837°C. Brazing alloys in accordance with the invention are useful in bonding ceramics to ceramics, ceramics to metals, and metals to metals. Such metals are preferably alumina-forming. Copper, vanadium, or other oxygen-reactive surface bonding elements may also be included, and use of such brazing alloys is preferably carried out in an oxidizing atmosphere.

### BRIEF DESCRIPTION OF THE DRAWINGS

The present invention will now be described, by way of example, with reference to the accompanying drawings, in which:
FIG. 1 is a silver/silicon phase diagram; and
FIG. 2 is a cross-sectional view of a portion of a fuel cell, showing bonding of a ceramic component to a metal component by a braze alloy in accordance with the invention;
FIG. 3 is a cross-sectional view of a portion of a fuel cell, similar to that shown in FIG. 2, but showing a second braze alloy having a different liquidus temperature; and
FIG. 4 is a silver/ruthenium phase diagram.

### DESCRIPTION OF THE PREFERRED EMBODIMENTS

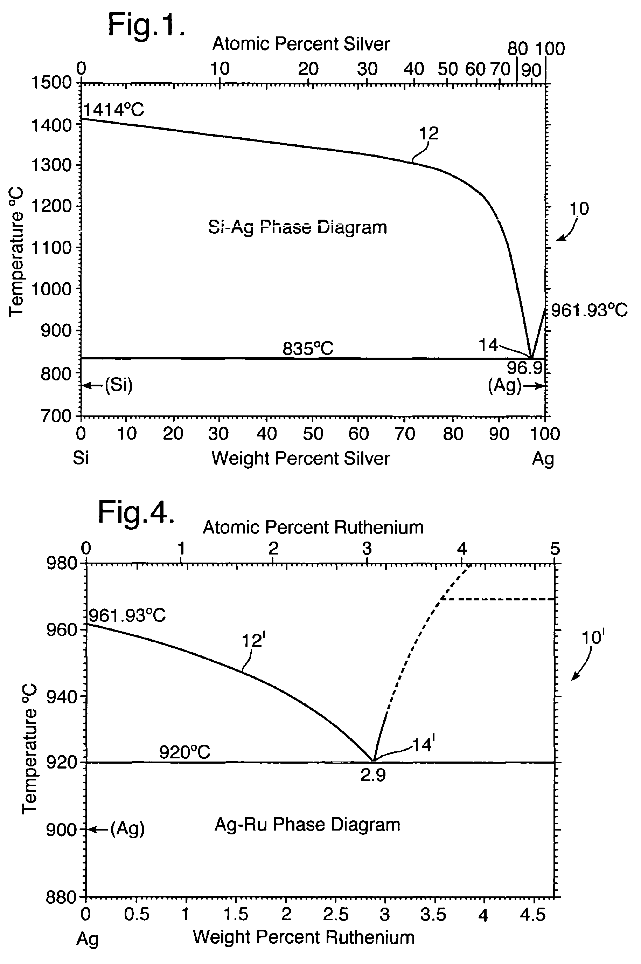

Referring to FIG. 1, a phase diagram 10 for silver and silicon alloy mixtures is conventionally displayed, having temperature on the vertical axis as a function of weight percent silicon on the horizontal axis. The solidus/liquidus curve 12 for alloys of silver and silicon extends from pure silver (MP of about 962°C) to pure silicon (MP 1414°C). Addition of relatively small amounts of silicon to pure silver serves to depress the alloy liquidus temperature significantly; a eutectic point 14 of about 835°C exists at a silver/silicon ratio of about 97/3. Useful liquidus temperature depressions below the 962°C melting temperature of silver exist up to about 5% silicon.

Referring to FIG. 4, a phase diagram 10' for silver and ruthenium alloy mixtures of a second embodiment, including solidus/liquidus curve 12' and eutectic point 14', is shown. In a silver/ruthenium ratio between about 96/4 and 99/1, preferably about 97/3, a liquidus temperature of about 920°C is achieved. Thus, the addition of relatively small amounts of ruthenium to pure silver similarly serves to depress the alloy liquidus temperature below the melting point of pure silver.

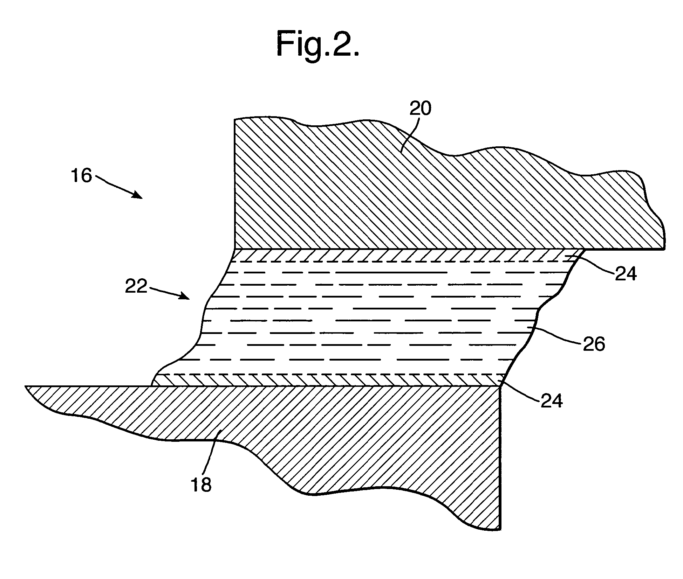

Referring to FIG. 2, in a solid-oxide fuel cell assembly 16, a ceramic-based fuel cell element 18 is bonded to a metal cassette 20 by a braze seal formed of a silver/silicon braze alloy 22 in accordance with the invention. Preferably, the braze alloy includes either copper or vanadium which is readily oxidized to form CuO or V₂O₅ during fusion of the alloy in an oxidizing atmosphere. The oxides separate from the alloy in known fashion and provide an adhesion layer 24 on element 18 and cassette 20 for attachment of the remaining silver/silicon alloy 26.

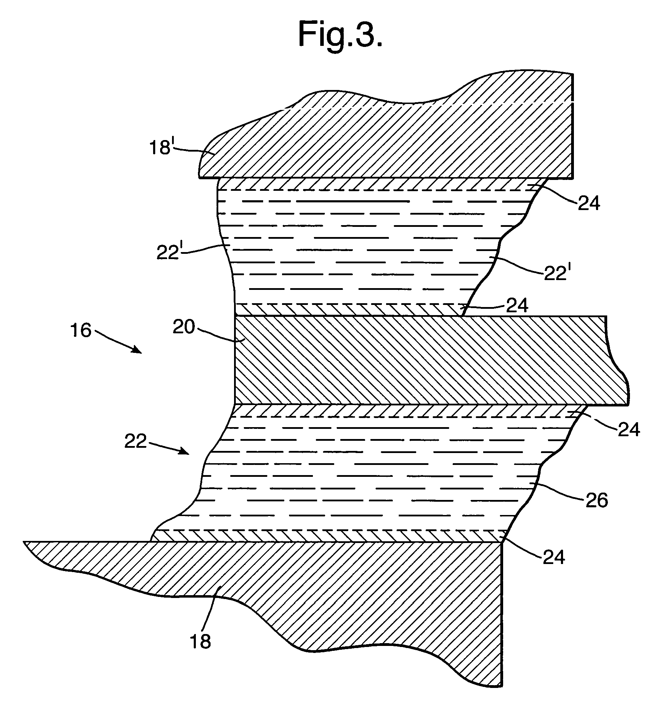

Referring to FIG. 3, it can be seen how the use of two or more different silver/silicon braze alloys can be used so that a additional brazed seals can be formed without re-liquefying the already formed brazed seals. As shown, fuel cell element 18 is bonded to a second element, such as cassette 20, by a braze seal formed of a silver/silicon braze alloy 22 having a liquidus temperature of less than 962°C, as described above. Third element 18' can then be bonded to element 20 (or any other element in the fuel cell assembly) using a silver/silicon braze alloy 22' having a different weight percentage concentration of silicon and having a liquidus temperature lower than the melting temperature of alloy 22.

While the invention as described above concerns a reactive air brazing alloy, it is understood that he braze alloy can be made from a mix of the elemental powders which would then be allowed to alloy during the brazing process.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A brazing alloy comprising silver and silicon, wherein said alloy has a liquidus temperature of less than about 962°C.

2. A brazing alloy in accordance with Claim 1 wherein the weight percent ratio of said silver to said silicon is between about 99/1 and about 95/5.

3. A brazing alloy in accordance with Claim 1 wherein the weight percent ratio of said silver to said silicon is about 97/3.

4. A brazing alloy in accordance with Claim 1 further comprising a second element selected from the group consisting of copper and vanadium.

5. A brazing alloy comprising silver and a second elemental component wherein the second elemental component is selected from the group coonsisting of silicon and ruthenium.

6. A brazing alloy according to Claim 5 wherein the second elemental component is ruthenium and said alloy has a liquidus temperature of less than about 962°C.

7. A brazing alloy according to Claim 6 wherein the weight percent ratio of said silver to said ruthenium is between about 99/1 and about 97/1.

8. A brazing alloy comprising silver and a second elemental component means for reducing the liquidus temperature of the alloy to a temperature below the melting point of elemental silver,

9. A fuel cell assembly comprising a first component and a second component wherein said first and second components are bonded by a brazing alloy comprising silver and a second elemental component wherein said second elemental component is selected from a group comprising silicon and ruthenium and wherein said alloy has a liquidus temperature of less than 962°C.

10. A fuel cell assembly in accordance with Claim 9 wherein said second elemental component is silicon and the weight percent ratio of said silver to said silicon is between about 99/1 and about 92/8.

11. A fuel cell assembly in accordance with Claim 9 wherein said second elemental component is ruthenium and the weight percent ratio of said silver to said ruthenium is between about 99/1 and about 97/3.

12. A fuel cell assembly in accordance with Claim 9 wherein at least one of said first and second components is a ceramic component.

13. A fuel cell assembly in accordance with Claim 9 wherein at least one of said first and second components is a metal component.

14. A fuel cell assembly in accordance with Claim 9 wherein said brazing alloy is a first brazing alloy, said fuel assembly further comprising an additional element wherein said additional element is bonded to one of said first element, second element and another element by a second brazing alloy having a liquidus temperature less than said liquidus temperature of said first brazing compound.

15. A fuel cell assembly in accordance with Claim 9 wherein said assembly comprises a solid oxide fuel cell.
